# EUROPEAN PATENT SPECIFICATION

(11) **EP 4 191 907 B1**
(45) Date of publication and mention of the grant of the patent: **22.04.2026**
(21) Application number: 21853168.9
(22) Date of filing: 09.06.2021
(51) Int. Cl.: G06F 9/455, H04L 41/0816, H04L 41/084, H04L 41/0895, H04L 41/342, H04L 41/5003, H04L 41/5009, H04L 41/5051

(54) **VNF INSTANTIATION METHOD AND APPARATUS**
VERFAHREN UND VORRICHTUNG ZUR VNF-INSTANZIIERUNG
PROCÉDÉ ET APPAREIL D'INSTANCIATION DE VNF

(30) Priority: 03.08.2020 CN 202010768159
(43) Date of publication of application: 07.06.2023
(73) Proprietor: Huawei Technologies Co., Ltd., Shenzhen, Guangdong 518129 (CN)
(72) Inventor: XIA, Haitao, Shenzhen, Guangdong 518129 (CN)
(74) Representative: Gill Jennings & Every LLP
(86) International application number: PCT/CN2021/099147
(87) International publication number: WO 2022/028092

(56) References cited:
- CN-A- 109 428 764
- CN-A- 111 399 968
- US-A1- 2020 014 698
- US-B2- 10 469 359
- "Network Functions Virtualisation (NFV) Release 4; Architectural Framework; Report on network connectivity for container based VNF", vol. WG NFV IFA Interfaces and Architecture, no. V0.0.5, 19 June 2020 (2020-06-19), pages 1 - 21, XP014372718, Retrieved from the Internet <URL:docbox.etsi.org/ISG/NFV/Open/Drafts/IFA038_container_network_report/NFV-IFA038v005/NFV-IFA038v005/GR_NFV-IFA038v005-clean.docx> [retrieved on 20200619]
- "Network Functions Virtualisation (NFV) Release 4 Management and Orchestration Requirements for service interfaces for OS container management and orchestration", vol. WG NFV IFA Interfaces and Architecture, no. V0.5.0, 26 March 2020 (2020-03-26), pages 1 - 19, XP014364835, Retrieved from the Internet <URL:docbox.etsi.org/ISG/NFV/Open/Drafts/IFA040__OS_Container_MANO_service_interfaces/NFV-IFA040v050/gs_NFV-IFA040v050-clean.docx> [retrieved on 20200326]
- ERICSSON LM: "IFA011ed411 MegaCR FEAT17 Cloud-native VNFs", vol. WG NFV IFA Interfaces and Architecture, 29 July 2020 (2020-07-29), pages 1 - 22, XP014377764, Retrieved from the Internet <URL:docbox.etsi.org/ISG/NFV/IFA/05-CONTRIBUTIONS/2020/NFVIFA(20)000479r5_IFA011ed411_MegaCR_FEAT17_Cloud-native_VNFs.docx> [retrieved on 20200729]
- LEONARDO R RODRIGUES ET AL: "Network-Aware Container Scheduling in Multi-Tenant Data Center", ARXIV.ORG, CORNELL UNIVERSITY LIBRARY, 201 OLIN LIBRARY CORNELL UNIVERSITY ITHACA, NY 14853, 17 September 2019 (2019-09-17), XP081482876

## Description

### TECHNICAL FIELD

This application relates to the field of communication technologies, and in particular, to VNF instantiation.

### BACKGROUND

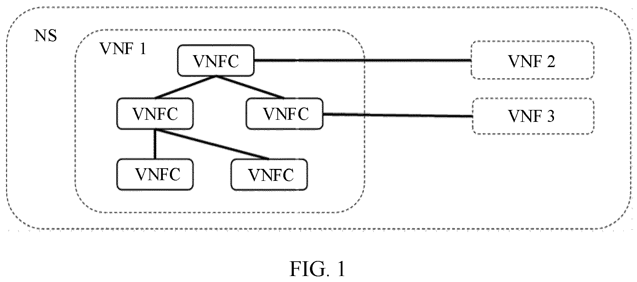

Currently, an ETSI NFV standard defines an information model of a network connection of a virtualized network function (Virtualized Network Function, VNF) implemented based on a virtual machine (Virtual Machine, VM). FIG. 1 is a schematic diagram of composition of a network service (Network Service, NS). A VNF is a composition member of the NS. An internal network of the VNF is a topology connection diagram formed by nodes and lines, the node includes a VNF component (VNF Component, VNFC) forming the VNF function, and the line includes a virtual link (Virtual Link, VL) that connects two VNFCs. A network topology inside a VNF is invisible to another member (for example, another VNF or a nested NS) of the NS other than the VNF.

A VNF descriptor (VNF Descriptor, VNFD) and an NS descriptor (NS Descriptor, NSD) are model flavors defined in the ETSI NFV standard for two major types of NFV objects: a VNF and an NS. A VNFD model defines object flavors such as a virtualized deployment unit (Virtualized Deployment Unit, VDU), a virtual link descriptor (Virtual Link Descriptor, VLD), and a connection point descriptor (Connection Point Descriptor, CPD), and policies are used to describe policies of scaling, an affinity, and a security group of a VNF. An NSD model defines NS service flavors for a scenario with a plurality of deployment flavors (Deployment Flavor, DF), and each service flavor may be independently deployed.

A VNFD performs, in a model flavor (a descriptor may be understood as a deployment flavor for managing a lifecycle of an NFV object) from perspectives of function deployment and operation and maintenance, modeling on an NFV object required for managing a VNF instance.

A VNFC is modeled as a virtualized deployment unit (Virtualized Deployment Unit, VDU). A VNFC is instantiated based on description information of a virtual resource defined in a VDU, and is mapped to computing and storage resources of a VM.

A connection point of a network service NS for external interaction is referred to as a service access point, which is modeled as a service access point descriptor (Service Access Point Descriptor, SAPD). An NS interacts with another NS by using a service access point (SAP) instance created by a SAPD.

Container as a service (Container as a Service, CaaS) is a new virtualization technology of a telecommunication operator network for a cloud transformation process oriented to an Internet Technology (Internet Technology, IT). In the CaaS technology, a virtualized network function (Virtualized Network Function, VNF) invokes one or more managed container infrastructure objects (Managed Container Infrastructure Object, MCIO, container object for short below) to implement its function, so as to form a containerized VNF. Lifecycle management on the containerized VNF is implemented by managing a container object invoked by the containerized VNF.

A current container network model is a flattened IT model. To be specific, configurations of a container network mainly consider a network connection requirement, but do not consider a differentiated network service performance requirement of a VNF (for example, a 5G vertical industry application) carried by the container network or enable differentiated processing on the configurations of the container network based on different requirements. For example, in an instantiation process or a running state of the containerized VNF, a conventional technology or an existing standard provides no related description on how to generate the container object invoked by the containerized VNF, how to update the configurations, and the like.

Network Functions Virtualisation (NFV) Release 4; Architectural Framework; Report on network connectivity for container based VNF", vol. WG NFV IFA Interfaces and Architecture, no. V0.0.5, (20200619), pages 1 - 21, ETSI DRAFT SPECIFICATION; NFV-IFA 038, EUROPEAN TELECOMMUNICATIONS STANDARDS INSTITUTE (ETSI), discloses the necessary capabilities of the NFV framework to support the management of network connectivity, and its associated network resources, for VNFs based on containers.

Network Functions Virtualisation (NFV) Release 4 Management and Orchestration Requirements for service interfaces for OS container management and orchestration", vol. WG NFV IFA Interfaces and Architecture, no. V0.5.0, (20200326), pages 1 - 19, ETSI DRAFT SPECIFICATION; NFV-IFA 040, EUROPEAN TELECOMMUNICATIONS STANDARDS INSTITUTE (ETSI), discloses the NFV object model for OS container management and orchestration and requirements on the list of services to be offered by architectural elements providing the Container Infrastructure Service Management (CISM) and Container Image Registry functions,

ERICSSON LM, "IFA011ed411 MegaCR FEAT17 Cloud-native VNFs", vol. WG NFV IFA Interfaces and Architecture, (20200729), pages 1 - 22, ETSI DRAFT; NFVIFA(20)000479R5, EUROPEAN TELECOMMUNICATIONS STANDARDS INSTITUTE (ETSI), discloses part of the **implementation** of Release 4 FEAT17 on Cloud-native VNFs.

### SUMMARY

Embodiments of the present invention provide a VNF instantiation method and an apparatus, to resolve problems of how to generate a container object and how to update a configuration.

An embodiment of the present invention provides a VNF instantiation method in accordance with appended claim 1.

After receiving the VNF instantiation request message sent by the NFVO, the VNFM accesses a descriptor VNFD of the to-be-instantiated VNF, reads a quality of service QoS attribute of an internal virtual link of the VNF from the VNFD, and determines the QoS attribute of the external connection of the to-be-created container object based on the QoS attribute of the internal virtual link of the VNF.

An embodiment of the present invention provides a container object creation method in accordance with appended claim 7.

Before the CISM receives the container object creation request message sent by the virtualized network function manager VNFM,
the VNFM receives a VNF instantiation request message sent by an NFVO, accesses a descriptor VNFD of a to-be-instantiated VNF, reads a quality of service QoS attribute of an internal virtual link of a VNF from the VNFD, and determines the QoS attribute of the external connection of the container object based on the QoS attribute of the internal virtual link of the VNF.

An embodiment of this application further provides a virtualized network function manager VNFM entity apparatus, including a processor and a memory. The processor is coupled to the memory, and the processor is configured to read and execute instructions in the memory, to perform the foregoing method steps performed by the VNFM.

An embodiment of this application further provides a container infrastructure service management CISM entity apparatus, including a processor and a memory. The processor is coupled to the memory, and the processor is configured to read and execute instructions in the memory, to perform the foregoing method steps performed by the CIMS.

An embodiment of this application further provides a system comprising: a virtualized network function manager VNFM; and a container infrastructure service management apparatus CISM, wherein the system is configured to perform the method of any one of claims 1-12.

According to the methods in embodiments of the present invention, when the VNFM manages a VNF instance, a differentiated performance requirement of a VNF network is transferred to the CISM, to implement dynamic generation or update of a container network and quickly respond to a performance requirement change of the VNF network.

### BRIEF DESCRIPTION OF DRAWINGS

FIG. 1 is a schematic diagram of composition of a network service in a conventional technology;
FIG. 2 is a diagram of an architecture of a Kubernetes container management orchestration system;
FIG. 3 is a schematic diagram of an NFV architecture according to an embodiment of the present invention;
FIG. 4 is a schematic diagram of an interworking requirement scenario of a container network according to an embodiment of the present invention;
FIG. 5 is a flowchart of a VNF instantiation method according to Embodiment 1 of this application;
FIG. 6 is a flowchart of a VNF update method according to Embodiment 2 of this application;
FIG. 7 is a schematic diagram of a VNFM apparatus according to an embodiment of the present invention;
FIG. 8 is a schematic diagram of a CISM apparatus according to an embodiment of the present invention; and
FIG. 9 is a diagram of hardware of a VNFM/CISM apparatus according to an embodiment of the present invention.

### DESCRIPTION OF EMBODIMENTS

To make objectives, technical solution, and advantages of embodiments of this application clearer, the following further describes embodiments of this application in detail with reference to the accompanying drawings.

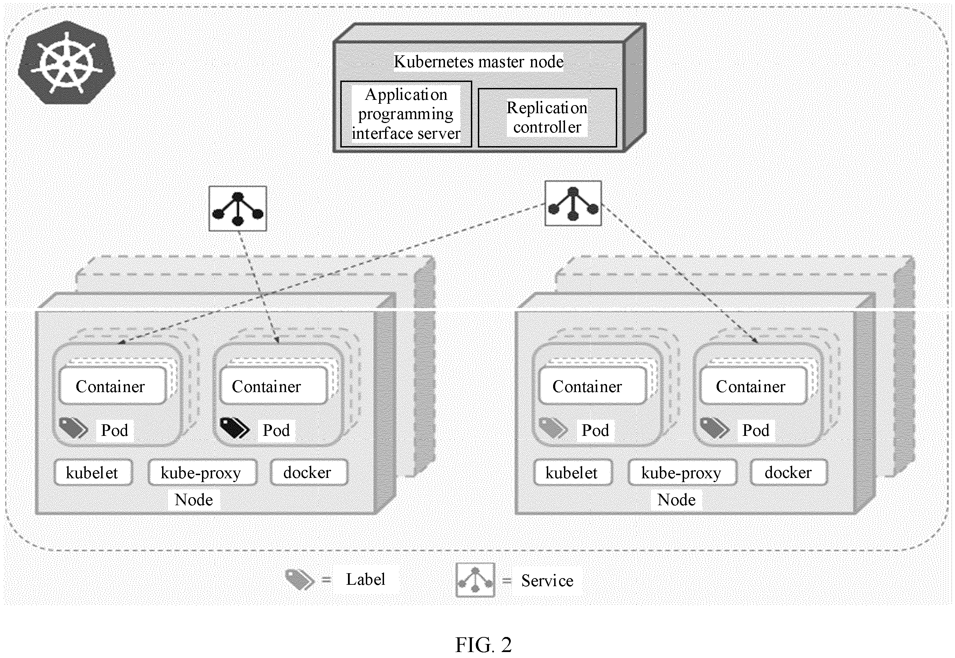

FIG. 2 is a diagram of an architecture of a Kubernetes (K8S) container management orchestration system.

In the Kubernetes, infrastructure resources in a container cluster are divided into a Kubernetes master (master) node and a group of working nodes (Node). A group of processes related to container cluster management are run on the master node (also referred to as a management node), such as an application programming interface server (Application Programming Interface Server, API Server) and a replication controller (Replication Controller, RC). These processes implement management functions of the entire container cluster, such as resource management, pod (Pod) scheduling, scaling, security control, system monitoring, and error correction. Three components are run on each work node: Kubelet, Proxy, and Docker, which are responsible for managing a lifecycle of a pod on this node and implementing a service agent function. As shown in FIG. 2, one pod may include at least one container. In this case, one pod may be understood as a pod including one or more containers.

The API server provides a unique operation entry of a resource object. All other components need to operate resource data through an API interface provided by the API server, and complete a related business function through "full query" and "change monitoring" on related resource data.

A controller manager is a management and control center of the container cluster. A main purpose of the controller manager is to implement automatic fault detection and recovery of the Kubernetes cluster. For example, a pod may be replicated or removed as defined by the RC, to ensure that a quantity of pod instances complies with a definition of the RC. Creation and update of an endpoint (Endpoints) object of a service (Service), discovery, management, and status monitoring of a node, and clean-up of a locally cached image file, and the like are complete based on a management relationship between the service and a pod.

The Kubelet component is responsible for full lifecycle management such as creation, modification, monitoring, and deletion of the pod on this node, and the Kubelet also periodically reports status information of this node to the API server.

The Proxy component is configured to implement load balancing between an agent and a software mode of the service.

The Docker component is a running environment of the container.

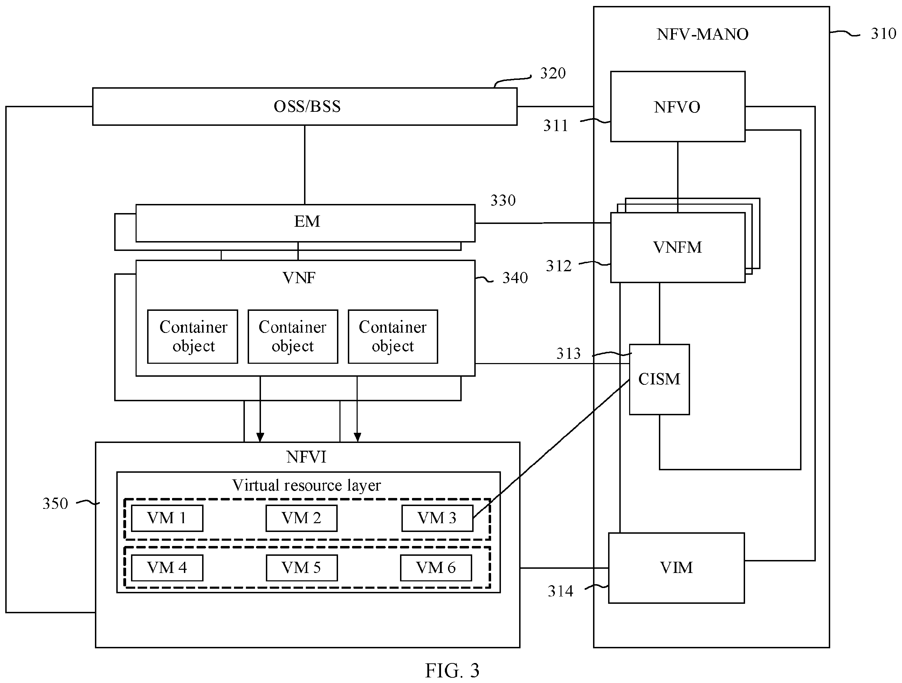

FIG. 3 is a schematic diagram of an NFV architecture. The NFV architecture can implement a plurality of networks, such as a local area network (Local Area Network, LAN), an internet protocol (Internet Protocol, IP) network, or an evolved packet core (Evolved Packet Core, EPC) network.

With continuous development of virtualization technologies, the industry proposes to introduce container management into a reference architecture of NFV management and orchestration (Management and Orchestration, MANO). FIG. 3 shows a deployment case of an NFV MANO system management container cluster defined by an NFV industry standard group subordinate to the European Telecommunications Standards Institute (European Telecommunications Standards Institute, ETSI).

As shown in FIG. 3, the deployment case includes an NFV-MANO 310, one or more operation support systems/business support systems (Operation Support System/Business Support System, OSS/BSS) 320, a plurality of element management (Element Manager, EM) systems 330, a plurality of VNFs 340, and an NFV infrastructure (NFV Infrastructure, NFVI) 350.

The OSS/BSS 320 is mainly oriented to a telecommunication serving operator and provides integrated network management and business operation functions, including network management (such as fault monitoring and network information collection), charging management, customer service management, and the like.

The EM 330 is configured to execute conventional functions of fault management, configuration management, account management, performance management, security management (Fault Management, Configuration Management, Account Management, Performance Management, Security Management, FCAPS) for the VNF.

The VNF 340 corresponds to a physical network function (Physical Network Function, PNF) in a conventional non-virtualized network, such as a virtualized evolved packet core (Evolved Packet Core, EPC) node (for example, a mobility management entity (Mobility Management Entity, MME), a serving gateway (Serving Gateway, SGW), or a public data network gateway (Public Data Network Gateway, PGW)). Functional behavior and a status of the network function are independent of virtualization. The NFV technology requires that the VNF and the PNF have same functional behavior and a same external interface.

The VNF 340 may include one or more container objects. One container object may be understood as the pod in FIG. 2. Each pod may be deployed in a container cluster node resource pool. A resource in each container cluster node resource pool may be a virtual machine (Virtual Machine, VM) or a bare metal (Bare Metal) server. Each VM carries one or more container objects.

The NFVI 350 may include a virtual resource layer. The virtual resource layer may include a plurality of VMs, and the plurality of VMs may be configured to form one or more container cluster node resource pools.

The NFV-MANO 310 may include an NFV orchestrator (NFV orchestrator, NFVO) 311, one or more VNFMs 312, container infrastructure service management (Container Infrastructure Service Management, CISM) 313, and a virtualized infrastructure manager (Virtualized Infrastructure Manager, VIM) 314.

The NFVO is configured to: implement management and processing of a network service descriptor (network service descriptor, NSD) and a virtualized network function forwarding graph (VNF forwarding graph, VNFFG), and lifecycle management of a network service; and cooperate with the VNFM to implement lifecycle management of a VNF and a global view function of a virtual resource.

The VNFM implements lifecycle management of a VNF, including management of a virtualized network function descriptor (VNF descriptor, VNFD), VNF instantiation, scaling of a VNF instance (including scaling out/up (scaling out/up) and scaling in/down (scaling in/down)), healing (healing) of a VNF instance, and termination of a VNF instance. The VNFM further supports receiving of a scaling (Scaling) policy delivered by the NFVO, to implement automatic scaling of a VNF.

The VIM is mainly responsible for resource management (including reservation and allocation) in the NFVI, and virtual resource status monitoring and fault reporting, and provides a virtualized resource pool for an upper-layer application.

Release 3 of the ETSI NFV standard starts to introduce a container management function into an NFV-MANO framework, and defines a functional requirement of a northbound service interface of the container infrastructure service management CISM to support container-based lifecycle management of a VNF. The CISM may also be referred to as CaaS management, and is responsible for managing a container object invoked by a VNF, including creation, update, and deletion of the container object, and scheduling the container object to a node resource corresponding to a corresponding VM in a container cluster node resource pool managed by the CISM. The node resource includes a computing resource, a storage resource, a network resource, and the like. Release 4 of the ETSI NFV standard continues study on a container network. A VNF network connection model is obtained by adding a layer of container network on a basis of an existing virtual machine network model. A container network connection model of a VNF describes a network connection between container objects (also referred to as managed container infrastructure objects, Managed Container Infrastructure Object, MCIO) at an abstract container object layer and interconnection between a container object and a container cluster node (for example, a virtual machine or a bare machine) that supports running of the container object.

Further, the VNF component (VNFC) is mapped to an MCIO (for example, a pod object of the Kubernetes) requesting a computing/storage resource, and an external connection point (External CP) of a VNF is mapped to an MCIO (for example, a network endpoint object of the K8S, usually attached to the MCIO to which the VNFC is mapped) requesting a network resource. Because container objects in a same container cluster node are connected to each other (a fully connected network), management on a container network by a container infrastructure service management (CISM) function is an autonomous management function that does not require participation by the NFVO or the VNFM, and the CISM automatically accesses an MCIO descriptor (MCIO Descriptor) and/or an MCIO configuration file (MCIO configuration files), to implement automatic network configuration between an internal network of an MCIO and the MCIO. Therefore, an MCIO corresponding to an internal connection point (Internal CP) of the VNF or an internal virtual link (Internal VL) of the VNF does not exist at the abstract container object layer, so that there is no need to map, in the VNFD, the internal connection point of the VNF and the internal virtual link of the VNF to a specific MCIO requesting a network resource.

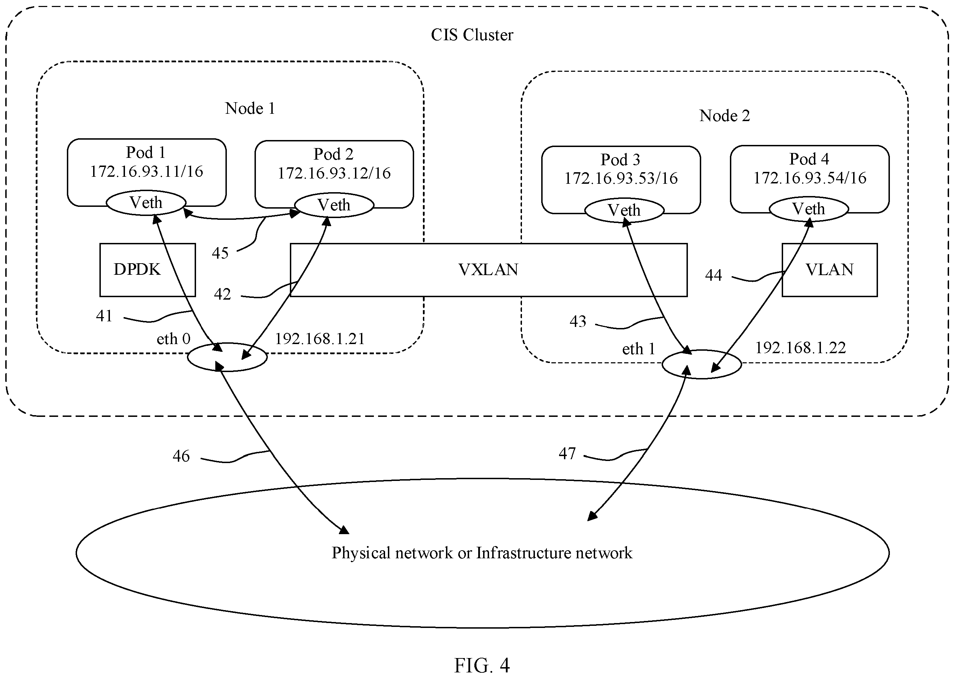

With reference to FIG. 4, containerized VNFs are deployed on two container cluster nodes: a CIS cluster node 1 and a CIS cluster node 2 (note: a full name of CIS is Container Infrastructure Service). A part of the VNFC is mapped to MCIOs (a pod 1 and a pod 2 in FIG. 4) on the CIS cluster node 1, and the other part of the VNFC is mapped to MCIOs (a pod 3 and a pod 4 in the figure) on the CIS cluster node 2. For these MCIOs, workload of the MCIOs are carried by one or more OS containers, while the CIS cluster node 1 and the CIS cluster node 2 each represent one virtual machine. An inter-node network (Inter-Node network) does not belong to a network that is configured autonomously by CISM, and this segment of network is usually still configured by a virtualized infrastructure manager (Virtualized Infrastructure Manager, VIM). The CISM completes configuration of a network connection between OS containers inside an MCIO and configuration of a network connection between MCIOs of a same node.

In FIG. 4, an interworking requirement of a container network includes four basic scenarios: A container object MCIO (that is, a pod in the figure) accesses an external network, MCIOs in one node access each other, MCIOs in different nodes access each other, and an MCIO is accessed from an external network. The external network includes a physical network (Physical Network) or an infrastructure network (Infrastructure Network) in FIG. 4. For access to an external network by a container object MCIO or access to an MCIO from an external network, refer to a connection channel 41 (a connection between a virtual Ethernet port of a container object pod 1 and an Ethernet port of a host node 1) and a connection channel 46 (a connection between the Ethernet port of the host node 1 and the external network) of the node 1 in FIG. 4. A combination of the connection channel 41 and the connection channel 46 constitutes a channel for accessing an external network by an MCIO or accessing an MCIO from an external network. Similarly, connection channels 47 and 43, or connection channels 47 and 44 constitute a channel for mutual access between an MCIO in the node 2 and an external network. For intra-node mutual access, refer to a connection channel 45 in FIG. 4. For inter-node mutual access, refer to the connection channels 41, 46, 47, and 43 in FIG. 4, which are combined together to form a channel for inter-node mutual access. FIG. 4 is only a schematic functional diagram, and an actual connection channel may be established or connected in a different manner.

A current container network model is a flattened IT model. To be specific, configurations of a container network mainly consider a network connection requirement, but do not consider a differentiated network service performance requirement of a VNF (for example, a 5G vertical industry application) carried by the container network or enable differentiated processing on the configurations of the container network based on different requirements.

For example, in an instantiation process or a running state of the containerized VNF, a conventional technology or an existing standard provides no related description on how to generate the container object invoked by the containerized VNF, how to update the configurations. and the like. In the running state of the VNF, with update of external VNF connectivity (External VNF Connectivity) in a network service update (NS update) operation, the configurations of the container network need to be dynamically updated to adapt to a VNF external connection point with a new network performance requirement. The VNF external connection point refers to an endpoint at which a VNF instance is connected to an external function, and the external function may be another VNF instance or a nested NS instance of an NS instance to which the VNF instance belongs.

Based on network performance characteristics of typical 5G businesses, for example, different businesses have different non-functional network requirements for a high bandwidth, an ultra-low latency, high reliability, high connection density, high security, and the like. VNF network performance requirements may include but are not limited to requirement definitions on quality of service (Quality of Service, QoS) and reliability indicators such as availability and security for a VNF virtual link VL or a connection point CP. The QoS usually refers to performance indicators including a bandwidth, a latency, a jitter, and a packet loss rate of a network node or a link during transmission.

Embodiment 1 of the present invention relates to a containerized VNF instantiation method, in which network configurations of a container object layer are kept flat (that is, only connectivity of a container network is considered during network configuration), and network configurations of a container cluster node (for example, a virtual machine) are updated to dynamically adapt to a change of VNF network performance. In combination with autonomy of managing a container network by the CISM function, a differentiated performance requirement of a VNF network is transferred to the CISM during lifecycle management on a VNF instance by the VNFM, to implement dynamic generation or update of the container network and quickly respond to a performance requirement change of the VNF network.

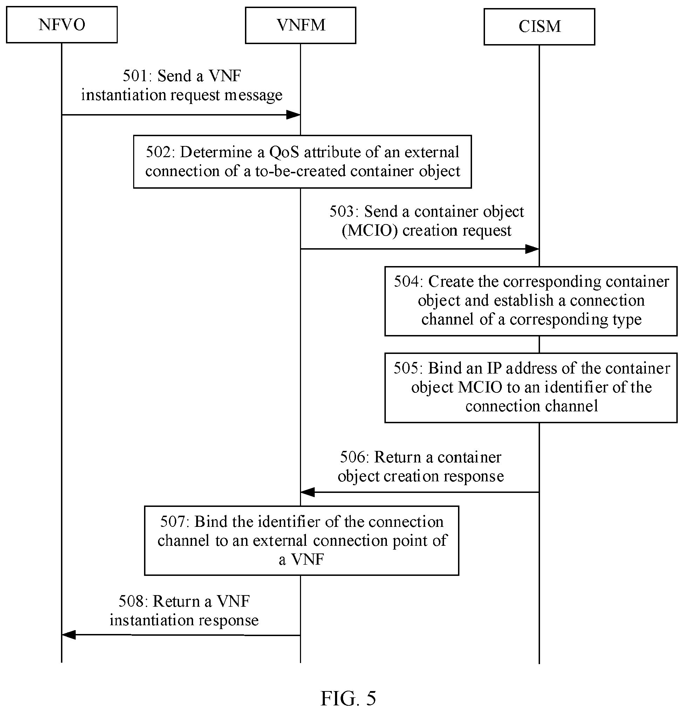

With reference to FIG. 5, the VNF instantiation method provided in Embodiment 1 of the present invention includes the following steps.

S501: An NFVO sends a VNF instantiation request to a VNFM, where the request message carries identification information of a VNF instance.

S502: The VNFM accesses a descriptor VNFD of the to-be-instantiated VNF based on the identification information in step S501, reads a quality of service (QoS) attribute of an internal virtual link (Internal Virtual Link, Int-VL) of the VNF from the VNFD, and determines, based on the QoS attribute of the internal virtual link of the VNF, a QoS attribute of an external connection of a container object MCIO to be used by the VNF.

The QoS attribute of the internal virtual link includes requirements on a bandwidth, a latency, a jitter, and/or a packet loss rate of the internal virtual link of the VNF during transmission.

The external connection of the container object is a connection established between a port (Virtual Ethernet, Veth) of a container object (each pod in the figure) in FIG. 4 and a port (each of eth0 and eth1) of a host node.

During determining of the QoS attribute of the external connection of the container object, the QoS attribute of the external connection of the container object needs to match the QoS attribute of the internal virtual link of the VNF, and the two QoS attributes cannot differ greatly from each other, and need to meet a transmission performance requirement of the VNF instance. Certainly, a table of a correspondence between a QoS attribute of an external connection of a container object and a QoS attribute of an internal virtual link of the VNF may be preestablished based on an actual requirement, and a QoS attribute of an external connection of a to-be-created MCIO is specifically determined based on the table. There are various specific implementations. Details are not described herein.

S503: The VNFM sends a container object (MCIO) creation request message to container infrastructure service management (Container Infrastructure Service Management, CISM), where the request message carries the QoS attribute of the external connection of the container object to be used by the to-be-instantiated VNF.

If one VNF uses a plurality of MCIOs, the plurality of MCIOs need to be created, and the creation request may carry identifiers of the plurality of MCIOs to be created.

S504: The CISM receives the container object creation request message, reads a descriptor of the container object and/or a configuration file of the container object, and creates the corresponding container object; and determines a type of a connection channel between each container object and a host node based on a QoS attribute of an external connection of each container object in the request message in S503, and establishes corresponding connection channels (41, 42, 43, and 44).

The connection channel between the container object and the host node may be implemented by using a container network interface (Container Network Interface, CNI) plug-in configured by the container object, and different types of connection channels implement external connections of MCIOs with different QoS attributes. In a possible implementation, the type of connection channel may include a data plane development kit (Data Plane Development Kit, DPDK), a network interface card direct connection, a virtual local area network (Virtual Local Area Network, VLAN), or a virtual extensible local area network (Virtual eXtensible Local Area Network, VXLAN). Transmission latencies of the foregoing types of transmission channels gradually increase from low to high. With reference to FIG. 4, the CISM determines, based on a QoS attribute of an external connection of a to-be-created container object 1 (a pod 1 in the figure), to use the DPDK type of connection channel, and establishes a connection channel of the corresponding type. The CISM determines, based on a QoS attribute of an external connection of a to-be-created container object 2 (a pod 2 in the figure), to use the VXLAN type of connection channel, and establishes a connection channel of the corresponding type. The CISM determines, based on a QoS attribute of an external connection of a to-be-created container object 3 (a pod 3 in the figure), to use the VXLAN type of connection channel, and establishes a connection channel of the corresponding type. The CISM determines, based on a QoS attribute of an external connection of a to-be-created container object 4 (a pod 4 in the figure), to use the VLAN type of connection channel, and establishes a connection channel of the corresponding type.

The DPDK implements data packet processing in a polling mode, and a container application (a VNF) may directly read a data packet from a memory through an interface provided by the DPDK. This reduces a CPU interruption time and a memory copy time, and meets data packet transmission of a container application with a high latency requirement. The network interface card direct connection (a network interface card vNIC of a container object and a network interface card vNIC of a host machine VM are directly connected through a network cable) is also a common data acceleration technology that improves transmission performance of data packets at costs of some reliability. The VLAN is used in a group of logical devices and users to implement communication between the devices and the user by using a router at a layer 3, to implement LAN-level transmission performance. The VXLAN is an extension of an XLAN. By introducing a UDP outer tunnel as a data link layer, a packet is easily transmitted at a layer 2 network and a layer 3 network. Usually, a type (for example, the DPDK) of connection channel with a lower transmission latency has a narrower application range, and is accompanied with a relevant constraint and limitation of reliability. A type (for example, the VXLAN) of connection channel with a higher transmission latency has a wider application range. The foregoing connection channel belongs to a specific physical implementation of the external connection of the container object. As described above, because there are different types of connection channels, QoS attributes of the connection channels of the different types are fixed, and the QoS does not need to be updated.

In addition, the host node of the container object may be a virtual machine or a bare metal server.

S505: The CISM binds an IP address of the container object MCIO to an identifier of the connection channel that is of the type determined in S504 and that is between the container object and the host node.

For example, in a connection channel of the VXLAN type, the CISM binds the IP address of the container object to a VXLAN tunnel endpoint, and all packets in the container object are sent and received between the VXLAN tunnel endpoint and an endpoint of the host node.

The IP address of the MCIO is fixed when presented outside the MCIO. "Binding" herein is to associate, in a same MCIO through a configuration operation, the IP address with the VXLAN tunnel endpoint used by the MCIO. Two pieces of configuration information are attached to the same MCIO object. A plurality of connection channels may exist between the MCIO and the host node, and be implemented by configuring different CNI (container network interface) plug-ins outside the MCIO.

S506: The CISM returns a container object creation response to the VNFM. Optionally, the response message may carry the identifier of the connection channel between the container object and the host node.

S507: Optionally, if the container object may be used as an endpoint for interconnection between the VNF and an external environment (for example, another VNF), the VNFM binds the identifier that is of the connection channel between the container object and the host node and that is obtained in step S506 to an external connection point (External Connection Point) of the VNF.

In an NFV-related standard, the foregoing "binding" may be understood as that the container object is associated with an external connection point of the VNF by using the connection channel between the container object and the host node, and communicates with the outside by using the external connection point.

S508: The VNFM returns a VNF instantiation response to the NFVO. The VNF instantiation process ends.

Embodiment 2 of the present invention relates to a containerized VNF update method. In an NS update process, an external CP of a VNF is updated, so that a container cluster node network dynamically adapts to a network performance requirement of the VNF.

This embodiment reflects how to dynamically update, in case of a change in the network performance requirement of the VNF, configurations of the container cluster node network to adapt to the change when a VNF instance is in a running state (a state of the VNF instance after the VNF instantiation process is complete). A typical scenario is a process of updating the external connection point of the VNF in the NS update process.

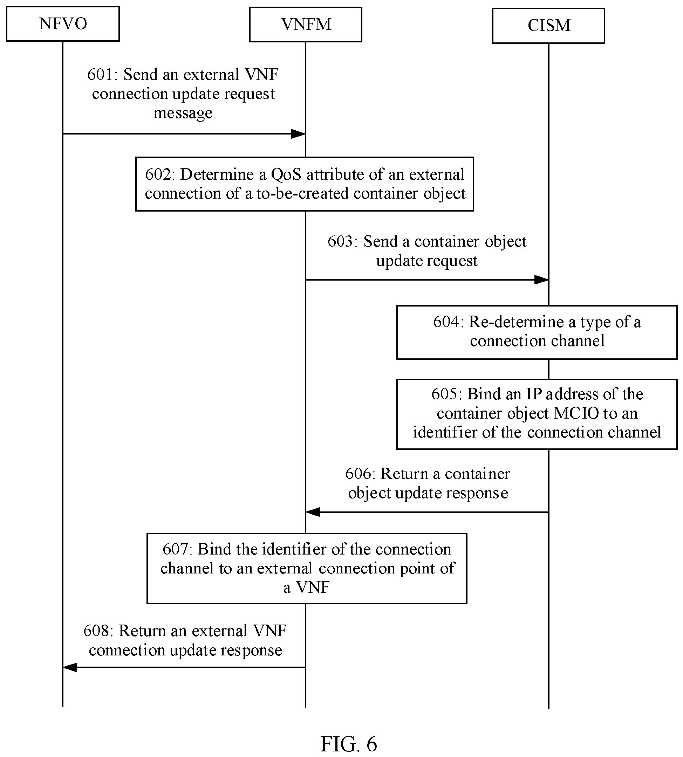

After being instantiated, the VNF enters the running state. In this case, if an NFVO receives an NS update request from an OSS/BSS, the request message carries an operation type of the NS update: update VNF external connectivity. Specific steps of Embodiment 2 are shown in FIG. 6. A main difference from Embodiment 1 lies in that the VNFM does not read the QoS attribute of the internal virtual link of the VNF by accessing the VNFD, but determines, by using the QoS attribute of the external connection point of the VNF, the QoS attribute of the external connection of the container object to be used by the VNF.

S601: The NFVO sends an external VNF connection update request message to the VNFM, where the request message carries a to-be-updated QoS attribute of the external connection point of the VNF instance.

S602: The VNFM determines a to-be-updated QoS attribute of the external connection of the container object based on the QoS attribute of the external connection point of the VNF instance.

The QoS attribute of the internal virtual link includes requirements on a bandwidth, a latency, a jitter, and/or a packet loss rate of the internal link during transmission, and a QoS attribute of an external connection of a to-be-created container object MCIO (a pod in FIG. 4) is determined based on the QoS attribute of the internal virtual link of the VNF. Similarly, the QoS attribute of the external connection of the container object needs to match the QoS attribute of the external connection point of the VNF instance, and the two QoS attributes cannot differ greatly from each other, and need to meet a transmission performance requirement of the VNF instance.

S603: The VNFM sends a container object (MCIO) update request to container infrastructure service management (Container Infrastructure Service Management, CISM), where the update request message carries the QoS attribute of the external connection of the to-be-updated container object.

S604: The CISM re-determines a type of a connection channel between the container object and the host node based on the to-be-updated QoS attribute that is of the external connection of the container object and that is determined in S602, and establishes a corresponding connection channel.

If the re-determined type of connection channel between the container object and the host node is the same as an existing type of connection channel, no update is performed. Otherwise, the type of connection channel is updated to a new one. For the type of connection channel, refer to the description in Embodiment 1.

S605: The CISM binds an IP address of the container object (MCIO) to an identifier of the connection channel that is between the container object and the host node and that is re-determined in S604.

S606: The CISM returns a container object update response message to the VNFM. Optionally, the update response message may carry the identifier of the updated connection channel between the container object and the host node.

S607: Optionally, if the container object may be used as an endpoint for interconnection between the VNF and an external environment (for example, another VNF), the VNFM binds the identifier that is of the connection channel between the container object and the host node and that is obtained in step S606 to an external connection point (External Connection Point) of the VNF.

S608: The VNFM returns an external VNF connection update response to the NFVO. The process of updating the external connection point of the VNF ends.

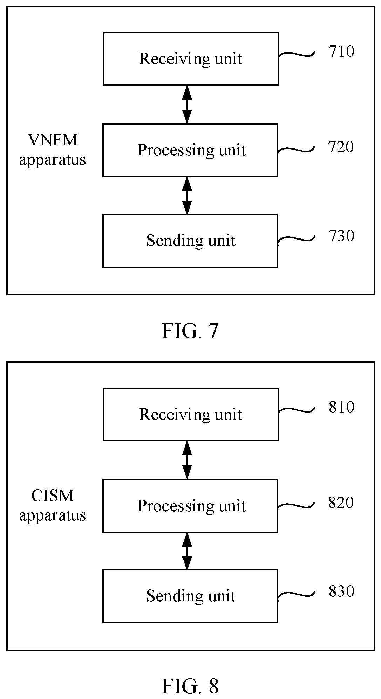

FIG. 7 is a schematic diagram of a virtualized network function manager VNFM apparatus. The apparatus includes:
a receiving unit 710, which may be configured to perform step S501 in Embodiment 1 shown in FIG. 5, or may be configured to perform step S601 in the embodiment shown in FIG. 6, and/or may be configured to support another process of the technology described in this specification;
a processing unit 720, which may be configured to perform steps S502 and S507 in Embodiment 1 shown in FIG. 5, or may be configured to perform steps S602 and S607 in the embodiment shown in FIG. 6, and/or may be configured to support another process of the technology described in this specification; and
a sending unit 730, which may be configured to perform step S503 in Embodiment 1 shown in FIG. 5, or may be configured to perform step S603 in the embodiment shown in FIG. 6, and/or may be configured to support another process of the technology described in this specification.

For functions of the foregoing units, refer to the descriptions of the method steps in Embodiment 1 or 2. Details are not repeated herein again.

FIG. 8 is a schematic diagram of a CISM apparatus. The apparatus includes:
a receiving unit 810, which may be configured to perform step S503 in Embodiment 1 shown in FIG. 5, or may be configured to perform step S603 in the embodiment shown in FIG. 6, and/or may be configured to support another process of the technology described in this specification;
a processing unit 820, which may be configured to perform steps S504 and S505 in Embodiment 1 shown in FIG. 5, or may be configured to perform steps S604 and S605 in the embodiment shown in FIG. 6, and/or may be configured to support another process of the technology described in this specification; and
a sending unit 830, which may be configured to perform step S506 in Embodiment 1 shown in FIG. 5, or may be configured to perform step S606 in the embodiment shown in FIG. 6, and/or may be configured to support another process of the technology described in this specification.

For functions of the foregoing units, refer to the descriptions of the method steps in Embodiment 1 or 2. Details are not repeated herein again.

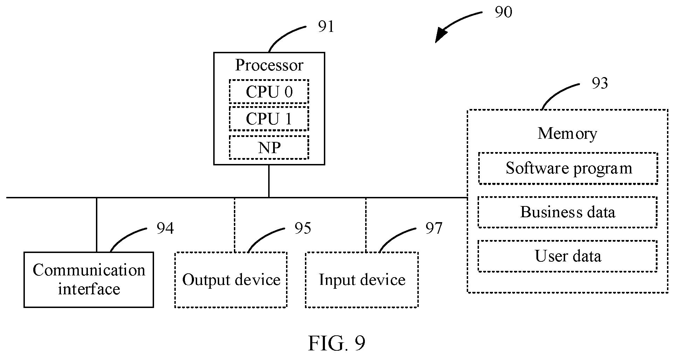

FIG. 9 is a diagram of hardware of a VNFM apparatus according to an embodiment of the present invention. The apparatus 90 may include a processor, a communication interface, and a memory.

The processor 91 may include one or more processing units, and the processing unit may be a central processing unit (English: central processing unit, CPU), a network processor (English: network processor, NP), or the like.

The communication interface 94 is configured to connect to and exchange information with another communication device, including receiving and sending corresponding messages. The network device 90 may further include the memory 93, and the processor 91 may be connected to the memory 93 and the communication interface 94 by using a bus. The memory 93 may be configured to store a software program, and the software program may be executed by the processor 91, to implement the method steps performed by the VNFM in the embodiment shown in FIG. 5 or FIG. 6. In addition, the memory 93 may further store various business data or user data, including status data and the like of various application instances and services in the foregoing method steps.

Optionally, the apparatus 90 may further include an output device 95 and an input device 97. The output device 95 and the input device 97 are connected to the processor 91. The output device 95 may be a display configured to display information, a power amplification device for playing a sound, a printer, or the like. The output device 95 may further include an output controller, configured to provide an output to a screen, a power amplification device, or a printer. The input device 97 may be a device used by a user to input information, such as a mouse, a keyboard, an electronic stylus, or a touch panel. The input device 97 may further include an output controller, configured to receive and process an input from a device such as a mouse, a keyboard, an electronic stylus, or a touch panel.

Similarly, the foregoing apparatus hardware diagram is also applicable to the CISM apparatus and another related apparatus. A difference is that the software program stored in the memory 93 of the foregoing apparatus is different from that of the CISM apparatus. The software program stored in the memory 93 of the CISM apparatus is executed by the processor 91, to implement the method steps performed by the CISM apparatus in Embodiment 1 or 2. Details are not repeated herein again.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid-state drive (Solid-State Drive, SSD)), or the like.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

## Claims

1. A virtualized network function VNF instantiation method, comprising:
receiving, by a virtualized network function manager VNFM (312), a VNF instantiation request message sent (501) by a network functions virtualization orchestrator NFVO (311), and determining (502), by the VNFM,
a quality of service QoS attribute of an external connection of a container object to be used by a VNF;
sending (503), by the VNFM, a container object creation request message to a container infrastructure service management CISM (313), wherein the request message carries the QoS attribute of the external connection of the container object; and
receiving, by the VNFM, a container object creation response message returned (506) by the CISM, and returning (508), by the VNFM, a VNF instantiation response message to the NFVO to complete VNF instantiation.

2. The instantiation method according to claim 1, wherein the method further comprises receiving, by the CISM, the container object creation request message, reading, by the CISM, a descriptor and/or a configuration file of the container object, creating (504), by the CISM, the corresponding container object, determining, by the CISM, a type of a connection channel between the container object and a host node based on the QoS attribute of the external connection of the container object, and establishing, by the CISM, a connection channel of the corresponding type.

3. The instantiation method according to claim 1 or claim 2, wherein the determining a QoS attribute of an external connection of a container object to be used by a VNF comprises:
accessing, by the VNFM, a descriptor VNFD of the to-be-instantiated VNF, reading, by the VNFM, a quality of service QoS attribute of an internal virtual link of the VNF from the VNFD, and determining, by the VNFM, based on the QoS attribute of the internal virtual link of the VNF, the QoS attribute of the external connection of the container object to be used by the VNF.

4. The instantiation method according to claim 2, wherein the method further comprises:
receiving, by the VNFM, an external VNF connection update request message sent (601) by the NFVO, wherein the request message carries a QoS attribute of an external connection point of the VNF;
updating (602), by the VNFM, the QoS attribute of the external connection of the container object based on the QoS attribute of the external connection point of the VNF;
sending (603), by the VNFM, a container object update request message to the CISM, wherein the update request message carries an updated QoS attribute of the external connection of the container object;
receiving, by the CISM, the container object update request message, re-determining (604), by the CISM, the type of the connection channel between the container object and the host node based on the updated QoS attribute of the external connection of the container object, and establishing, by the CISM, a connection channel of the corresponding type; and
receiving, by the VNFM, a container object update response message returned (606) by the CISM, and returning, by the VNFM, (608) an external VNF connection update response message to the NFVO to complete updating the external connection point of the VNF.

5. The instantiation method according to claim 2 or 4, wherein the method further comprises:
the container object creation response message or the container object update response message that is received by the VNFM and returned by the CISM carries an identifier of the connection channel between the container object and the host node; and
binding, by the VNFM, the identifier of the connection channel to the external connection point of the VNF.

6. The instantiation method according to any one of claims 2 to 4, wherein the host node comprises a virtual machine and/or a bare metal server.

7. A container object creation method, comprising:
receiving, by container infrastructure service management CISM (313), a container object creation request message sent (503) by a virtualized network function manager VNFM (312), wherein the request message carries a QoS attribute of an external connection of a container object; and
reading, by the CISM, a descriptor and/or a configuration file of the container object, creating (504), by the CISM, the corresponding container object, determining, by the CISM, a type of a connection channel between the container object and a host node based on the QoS attribute of the external connection of the container object, and establishing, by the CISM, a connection channel of the corresponding type.

8. The creation method according to claim 7, wherein before the receiving, by CISM, a container object creation request message sent by a virtualized network function manager VNFM, the method further comprises:
receiving, by the VNFM, a VNF instantiation request message sent (501) by a network functions virtualization orchestrator NFVO (311), accessing, by the VNFM, a descriptor VNFD of a to-be-instantiated VNF, reading, by the VNFM, a quality of service QoS attribute of an internal virtual link of a VNF from the VNFD, and determining, by the VNFM, the QoS attribute of the external connection of the container object based on the QoS attribute of the internal virtual link of the VNF.

9. The creation method according to claim 7, wherein the method further comprises:
receiving, by the CISM, a container object update request message sent (603) by the VNFM, wherein the update request message carries an updated QoS attribute of the external connection of the container object; and
re-determining (604), by the CISM, the type of the connection channel between the container object and the host node based on the updated QoS attribute of the external connection of the container object, and establishing, by the CISM, a connection channel of the corresponding type.

10. The creation method according to claim 9, wherein before the receiving, by the CISM, a container object update request message sent by the VNFM, the method further comprises:
receiving, by the VNFM, an external VNF connection update request message sent (601) by the NFVO, wherein the request message carries a QoS attribute of an external connection point of the VNF; and
updating (602), by the VNFM, the QoS attribute of the external connection of the container object based on the QoS attribute of the external connection point of the VNF.

11. The instantiation method according to any one of claims 2 to 4 or the creation method according to any one of claims 7 to 10, wherein the type of the connection channel comprises:
a data plane development kit, a network interface card direct connection, a virtual local area network, and/or virtual extensible local area network.

12. The instantiation method according to any one of claims 1 to 4 or the creation method according to any one of claims 7 to 10, wherein the QoS attributes comprise:
a bandwidth, a latency, a jitter, and a packet loss rate of a link during transmission.

13. A virtualized network function manager, comprising a processor and a memory, wherein the processor is coupled to the memory, and the processor is configured to read and execute instructions in the memory, to enable the virtualized network function manager to perform the method steps according toclaim 1.

14. A container infrastructure service management apparatus, comprising a processor and a memory, wherein the processor is coupled to the memory, and the processor is configured to read and execute instructions in the memory, to enable the container infrastructure service management apparatus to perform the method steps according to claim 7 or 9.

15. A system comprising:
a virtualized network function manager VNFM; and
a container infrastructure service management apparatus CISM, wherein the system is configured to perform the method of any one of claims 1-12.

## Patentansprüche

1. Verfahren zur Instanziierung einer virtualisierten Netzwerkfunktion, VNF, umfassend:
Empfangen, durch einen Manager einer virtualisierten Netzwerkfunktion, VNFM (312), einer VNF-Instanziierungsanforderungsnachricht, die durch einen Netzwerkfunktionsvirtualisierungsorchestrator, NFVO (311), gesendet wird (501), und
Bestimmen (502), durch den VNFM, eines Quality-of-Service-Attributs, QoS-Attributs, einer externen Verbindung eines Containerobjekts, das durch eine VNF zu verwenden ist;
Senden (503), durch den VNFM, einer Containerobjekterstellungsanforderungsnachricht an ein Containerinfrastrukturdienstmanagement, CISM (313), wobei die Anforderungsnachricht das QoS-Attribut der externen Verbindung des Containerobjekts enthält; und
Empfangen, durch den VNFM, einer Containerobjekterstellungsantwortnachricht, die durch das CISM zurückgeschickt wird (506), und Zurückschicken (508), durch den VNFM, einer VNF-Instanziierungsantwortnachricht an den NFVO, um die VNF-Instanziierung abzuschließen.

2. Verfahren zur Instanziierung nach Anspruch 1, wobei das Verfahren ferner Empfangen, durch das CISM, der Containerobjekterstellungsanforderungsnachricht, Auslesen, durch das CISM, eines Deskriptors und/oder einer Konfigurationsdatei des Containerobjekts, Erstellen (504), durch das CISM, des entsprechenden Containerobjekts, Bestimmen, durch das CISM, eines Typs eines Verbindungskanals zwischen dem Containerobjekt und einem Hostknoten basierend auf dem QoS-Attribut der externen Verbindung des Containerobjekts und Einrichten, durch das CISM, eines Verbindungskanals des entsprechenden Typs umfasst.

3. Verfahren zur Instanziierung nach Anspruch 1 oder Anspruch 2, wobei das Bestimmen eines QoS-Attributs einer externen Verbindung eines Containerobjekts, das durch eine VNF zu verwenden ist, Folgendes umfasst:
Zugreifen, durch den VNFM, auf einen Deskriptor, VNFD, der zu instanziierenden VNF, Auslesen, durch den VNFM, eines Quality-of-Service-Attributs, QoS-Attributs, eines internen virtuellen Links der VNF aus dem VNFD und Bestimmen, durch den VNFM basierend auf dem QoS-Attribut des internen virtuellen Links der VNF, des QoS-Attributs der externen Verbindung des Containerobjekts, das durch die VNF zu verwenden ist.

4. Verfahren zur Instanziierung nach Anspruch 2, wobei das Verfahren ferner Folgendes umfasst:
Empfangen, durch den VNFM, einer externen VNF-Verbindungsaktualisierungsanforderungsnachricht, die durch den NFVO gesendet wird (601), wobei die Anforderungsnachricht ein QoS-Attribut eines externen Verbindungspunkts der VNF enthält; Aktualisieren (602), durch den VNFM, des QoS-Attributs der externen Verbindung des Containerobjekts basierend auf dem QoS-Attribut des externen Verbindungspunkts der VNF;
Senden (603), durch den VNFM, einer Containerobjektaktualisierungsanforderungsnachricht an das CISM, wobei die Aktualisierungsanforderungsnachricht ein aktualisiertes QoS-Attribut der externen Verbindung des Containerobjekts enthält;
Empfangen, durch das CISM, der Containerobjektaktualisierungsanforderungsnachricht, Neubestimmen (604), durch das CISM, des Typs des Verbindungskanals zwischen dem Containerobjekt und dem Hostknoten basierend auf dem aktualisierten QoS-Attribut der externen Verbindung des Containerobjekts und Einrichten, durch das CISM, eines Verbindungskanals des entsprechenden Typs; und Empfangen, durch den VNFM, einer Containerobjektaktualisierungsantwortnachricht, die durch das CISM zurückgeschickt wird (606), und Zurückschicken, durch den VNFM, (608) einer externen VNF-Verbindungsaktualisierungsantwortnachricht an den NFVO, um Aktualisieren des externen Verbindungspunkts der VNF abzuschließen.

5. Verfahren zur Instanziierung nach Anspruch 2 oder 4, wobei das Verfahren ferner Folgendes umfasst:
die Containerobjekterstellungsantwortnachricht oder die Containerobjektaktualisierungsantwortnachricht, die durch den VNFM empfangen wird und durch das CISM zurückgeschickt wird, enthält eine Kennung des Verbindungskanals zwischen dem Containerobjekt und dem Hostknoten; und
Binden, durch den VNFM, der Kennung des Verbindungskanals an den externen Verbindungspunkt der VNF.

6. Verfahren zur Instanziierung nach einem der Ansprüche 2 bis 4, wobei der Hostknoten eine virtuelle Maschine und/oder einen Bare-Metal-Server umfasst.

7. Containerobjekterstellungsverfahren, umfassend:
Empfangen, durch ein Containerinfrastrukturdienstmanagement, CISM (313), einer Containerobjekterstellungsanforderungsnachricht, die durch einen Manager einer virtualisierten Netzwerkfunktion, VNFM (312), gesendet wird (503), wobei die Anforderungsnachricht ein QoS-Attribut einer externen Verbindung eines Containerobjekts enthält; und
Auslesen, durch das CISM, eines Deskriptors und/oder einer Konfigurationsdatei des Containerobjekts, Erstellen (504), durch das CISM, des entsprechenden Containerobjekts, Bestimmen, durch das CISM, eines Typs eines Verbindungskanals zwischen dem Containerobjekt und einem Hostknoten basierend auf dem QoS-Attribut der externen Verbindung des Containerobjekts und Einrichten, durch das CISM, eines Verbindungskanals des entsprechenden Typs.

8. Erstellungsverfahren nach Anspruch 7, wobei das Verfahren vor dem Empfangen, durch das CISM, einer Containerobjekterstellungsanforderungsnachricht, die durch einen Manager einer virtualisierten Netzwerkfunktion, VNFM, gesendet wird, ferner Folgendes umfasst:
Empfangen, durch den VNFM, einer VNF-Instanziierungsanforderungsnachricht, die durch einen Netzwerkfunktionsvirtualisierungsorchestrator, NFVO (311), gesendet wird (501), Zugreifen, durch den VNFM, auf einen Deskriptor, VNFD, einer zu instanziierenden VNF, Auslesen, durch den VNFM, eines Quality-of-Service-Attributs, QoS-Attributs, eines internen virtuellen Links einer VNF aus dem VNFD und Bestimmen, durch den VNFM, des QoS-Attributs der externen Verbindung des Containerobjekts basierend auf dem QoS-Attribut des internen virtuellen Links der VNF.

9. Erstellungsverfahren nach Anspruch 7, wobei das Verfahren ferner Folgendes umfasst:
Empfangen, durch das CISM, einer Containerobjektaktualisierungsanforderungsnachricht, die durch den VNFM gesendet wird (603), wobei die Aktualisierungsanforderungsnachricht ein aktualisiertes QoS-Attribut der externen Verbindung des Containerobjekts enthält; und
Neubestimmen (604), durch das CISM, des Typs des Verbindungskanals zwischen dem Containerobjekt und dem Hostknoten basierend auf dem aktualisierten QoS-Attribut der externen Verbindung des Containerobjekts und Einrichten, durch das CISM, eines Verbindungskanals des entsprechenden Typs.

10. Erstellungsverfahren nach Anspruch 9, wobei das Verfahren vor dem Empfangen, durch das CISM, einer Containerobjektaktualisierungsanforderungsnachricht, die durch den VNFM gesendet wird, ferner Folgendes umfasst:
Empfangen, durch den VNFM, einer externen VNF-Verbindungsaktualisierungsanforderungsnachricht, die durch den NFVO gesendet wird (601), wobei die Anforderungsnachricht ein QoS-Attribut eines externen Verbindungspunkts der VNF enthält; und
Aktualisieren (602), durch den VNFM, des QoS-Attributs der externen Verbindung des Containerobjekts basierend auf dem QoS-Attribut des externen Verbindungspunkts der VNF.

11. Verfahren zur Instanziierung nach einem der Ansprüche 2 bis 4 oder Erstellungsverfahren nach einem der Ansprüche 7 bis 10, wobei der Typ des Verbindungskanals Folgendes umfasst:
ein Data Plane Development Kit, eine direkte Verbindung über eine Netzwerkschnittstellenkarte, ein virtuelles lokales Netzwerk und/oder ein virtuelles erweiterbares lokales Netzwerk.

12. Verfahren zur Instanziierung nach einem der Ansprüche 1 bis 4 oder Erstellungsverfahren nach einem der Ansprüche 7 bis 10, wobei die QoS-Attribute Folgendes umfassen:
eine Bandbreite, eine Latenz, einen Jitter und eine Paketverlustrate einer Verbindung während einer Übertragung.

13. Manager einer virtualisierten Netzwerkfunktion, umfassend einen Prozessor und einen Speicher, wobei der Prozessor mit dem Speicher gekoppelt ist und der Prozessor dazu konfiguriert ist, Anweisungen aus dem Speicher auszulesen und auszuführen, um den Manager einer virtualisierten Netzwerkfunktion in die Lage zu versetzen, die Verfahrensschritte nach Anspruch 1 durchzuführen.

14. Containerinfrastrukturdienstmanagement-Vorrichtung, umfassend einen Prozessor und einen Speicher, wobei der Prozessor mit dem Speicher gekoppelt ist und der Prozessor dazu konfiguriert ist, Anweisungen aus dem Speicher auszulesen und auszuführen, um die Containerinfrastrukturdienstmanagement-Vorrichtung in die Lage zu versetzen, die Verfahrensschritte nach Anspruch 7 oder 9 durchzuführen.

15. System, umfassend:
einen Manager einer virtualisierten Netzwerkfunktion VNFM; und
eine Containerinfrastrukturdienstmanagement-Vorrichtung, CISM-Vorrichtung, wobei das System dazu konfiguriert ist, das Verfahren nach einem der Ansprüche 1-12 auszuführen.

## Revendications

1. Procédé d'instanciation de fonction de réseau virtualisé, VNF, comprenant :
la réception, par un gestionnaire de fonctions réseau virtualisé VNFM (312), d'un message de demande d'instanciation de VNF envoyé (501) par un orchestrateur de virtualisation de fonctions réseau NFVO (311), et la détermination (502), par le VNFM, d'un attribut de qualité de service QoS d'une connexion externe d'un objet conteneur destiné à être utilisé par une VNF ;
l'envoi (503), par le VNFM, d'un message de demande de création d'objet conteneur à une unité de gestion de services d'infrastructure de conteneurs CISM (313), dans lequel le message de demande transporte l'attribut QoS de la connexion externe de l'objet conteneur ; et
la réception, par le VNFM, d'un message de réponse de création d'objet conteneur renvoyé (506) par la CISM, et le renvoi (508), par le VNFM, d'un message de réponse d'instanciation de VNF au NFVO pour terminer l'instanciation de VNF.

2. Procédé d'instanciation selon la revendication 1, dans lequel le procédé comprend également la réception, par la CISM, du message de demande de création d'objet conteneur, la lecture, par la CISM, d'un descripteur et/ou d'un fichier de configuration de l'objet conteneur, la création (504), par la CISM, de l'objet conteneur correspondant, la détermination, par la CISM, d'un type de canal de connexion entre l'objet conteneur et un nœud hôte sur la base de l'attribut QoS de la connexion externe de l'objet conteneur, et l'établissement, par la CISM, d'un canal de connexion du type correspondant.

3. Procédé d'instanciation selon la revendication 1 ou la revendication 2, dans lequel la détermination d'un attribut QoS d'une connexion externe d'un objet conteneur à utiliser par une VNF comprend :
l'accès, par le VNFM, à un descripteur VNFD de la VNF à instancier, la lecture, par le VNFM, d'un attribut de qualité de service QoS d'une liaison virtuelle interne de la VNF à partir du VNFD, et la détermination, par le VNFM, sur la base de l'attribut QoS de la liaison virtuelle interne de la VNF, de l'attribut QoS de la connexion externe de l'objet conteneur à utiliser par la VNF.

4. Procédé d'instanciation selon la revendication 2, dans lequel le procédé comprend également :
la réception, par le VNFM, d'un message de demande de mise à jour de connexion VNF externe envoyé (601) par le NFVO, dans lequel le message de demande transporte un attribut QoS d'un point de connexion externe de la VNF ;
la mise à jour (602), par le VNFM, de l'attribut QoS de la connexion externe de l'objet conteneur sur la base de l'attribut QoS du point de connexion externe de la VNF ;
l'envoi (603), par le VNFM, d'un message de demande de mise à jour d'objet conteneur à la CISM, dans lequel le message de demande de mise à jour transporte un attribut QoS mis à jour de la connexion externe de l'objet conteneur ;
la réception, par la CISM, du message de demande de mise à jour d'objet conteneur, la redétermination (604), par la CISM, du type du canal de connexion entre l'objet conteneur et le nœud hôte sur la base de l'attribut QoS mis à jour de la connexion externe de l'objet conteneur, et l'établissement, par la CISM, d'un canal de connexion du type correspondant ; et
la réception, par le VNFM, d'un message de réponse de mise à jour d'objet conteneur renvoyé (606) par la CISM, et le renvoi, par le VNFM, (608) d'un message de réponse de mise à jour de connexion VNF externe au NFVO pour terminer la mise à jour du point de connexion externe de la VNF.

5. Procédé d'instanciation selon la revendication 2 ou 4, dans lequel le procédé comprend également :
le message de réponse de création d'objet conteneur ou le message de réponse de mise à jour d'objet conteneur reçu par le VNFM et
renvoyé par la CISM transporte un identifiant du canal de connexion entre l'objet conteneur et le nœud hôte ; et
la liaison, par le VNFM, de l'identifiant du canal de connexion au point de connexion externe de la VNF.

6. Procédé d'instanciation selon l'une quelconque des revendications 2 à 4, dans lequel le nœud hôte comprend une machine virtuelle et/ou un serveur métal nu.

7. Procédé de création d'objet conteneur, comprenant :
la réception, par une unité de gestion de services d'infrastructure de conteneurs CISM (313), d'un message de demande de création d'objet conteneur envoyé (503) par un gestionnaire de fonctions réseau virtualisé VNFM (312), dans lequel le message de demande transporte un attribut QoS d'une connexion externe d'un objet conteneur ; et
la lecture, par la CISM, d'un descripteur et/ou d'un fichier de configuration de l'objet conteneur, la création (504), par la CISM, de l'objet conteneur correspondant, la détermination, par la CISM, d'un type d'un canal de connexion entre l'objet conteneur et un nœud hôte sur la base de l'attribut QoS de la connexion externe de l'objet conteneur, et l'établissement, par la CISM, d'un canal de connexion du type correspondant.

8. Procédé de création selon la revendication 7, dans lequel, avant la réception, par la CISM, d'un message de demande de création d'objet conteneur envoyé par un gestionnaire de fonctions réseau virtualisé VNFM, le procédé comprend également :
la réception, par le VNFM, d'un message de demande d'instanciation de VNF envoyé (501) par un orchestrateur de virtualisation de fonctions réseau NFVO (311), l'accès, par le VNFM, à un descripteur VNFD d'une VNF à instancier, la lecture, par le VNFM, d'un attribut de qualité de service QoS d'une liaison virtuelle interne d'une VNF à partir du VNFD, et la détermination, par le VNFM, de l'attribut QoS de la connexion externe de l'objet conteneur sur la base de l'attribut QoS de la liaison virtuelle interne de la VNF.

9. Procédé de création selon la revendication 7, dans lequel le procédé comprend également :
la réception, par la CISM, d'un message de demande de mise à jour d'objet conteneur envoyé (603) par la VNFM, dans lequel le message de demande de mise à jour transporte un attribut QoS mis à jour de la connexion externe de l'objet conteneur ; et
la redétermination (604), par la CISM, du type du canal de connexion entre l'objet conteneur et le nœud hôte sur la base de l'attribut QoS mis à jour de la connexion externe de l'objet conteneur, et l'établissement, par la CISM, d'un canal de connexion du type correspondant.

10. Procédé de création selon la revendication 9, dans lequel, avant la réception, par la CISM, d'un message de demande de mise à jour d'objet conteneur envoyé par le VNFM, le procédé comprend également :
la réception, par le VNFM, d'un message de demande de mise à jour de connexion VNF externe envoyé (601) par le NFVO, dans lequel le message de demande transporte un attribut QoS d'un point de connexion externe de la VNF ; et
la mise à jour (602), par le VNFM, de l'attribut QoS de la connexion externe de l'objet conteneur sur la base de l'attribut QoS du point de connexion externe de la VNF.

11. Procédé d'instanciation selon l'une quelconque des revendications 2 à 4 ou procédé de création selon l'une quelconque des revendications 7 à 10, dans lequel le type du canal de connexion comprend :
un kit de développement de plan de données, une connexion directe de carte d'interface réseau, un réseau local virtuel et/ou un réseau local extensible virtuel.

12. Procédé d'instanciation selon l'une quelconque des revendications 1 à 4 ou procédé de création selon l'une quelconque des revendications 7 à 10, dans lequel les attributs QoS comprennent :
une bande passante, une latence, une gigue et un taux de perte de paquets d'une liaison pendant la transmission.

13. Gestionnaire de fonctions réseau virtualisé, comprenant un processeur et une mémoire, dans lequel le processeur est couplé à la mémoire et le processeur est configuré pour lire et exécuter des instructions dans la mémoire, afin de permettre au gestionnaire de fonctions réseau virtualisé de réaliser les étapes de procédé selon la revendication 1.

14. Appareil de gestion de services d'infrastructure de conteneurs, comprenant un processeur et une mémoire, dans lequel le processeur est couplé à la mémoire et le processeur est configuré pour lire et exécuter des instructions dans la mémoire, afin de permettre à l'appareil de gestion de services d'infrastructure de conteneurs de réaliser les étapes de procédé selon la revendication 7 ou 9.

15. Système comprenant :
un gestionnaire de fonctions réseau virtualisé VNFM ; et
un appareil de gestion de services d'infrastructure de conteneurs CISM, dans lequel le système est configuré pour réaliser le procédé selon l'une quelconque des revendications 1 à 12.
